# EUROPEAN PATENT APPLICATION

(11) **EP 4 787 268 A1**
(43) Date of publication of application: **05.08.2026**
(21) Application number: 23954157.6
(22) Date of filing: 26.09.2023
(51) Int. Cl.: G06Q 20/30

(54) **CASH PROCESSING DEVICE, CASH PROCESSING SYSTEM, AND CASH PROCESSING METHOD**

(71) Applicant: GLORY LTD., Himeji-shi Hyogo 670-8567 (JP)
(72) Inventor: SHIMIZU, Misaki, Himeji-shi, Hyogo 670-8567 (JP)
(74) Representative: SSM Sandmair
(86) International application number: PCT/JP2023/034918
(87) International publication number: WO 2025/069180

(57) **Abstract**

To allow cash to be easily transferred among users, a cash handling apparatus includes: a receiving unit that accepts, from a payer who pays a recipient in cash, payment information including payer information for identifying the payer, recipient information for identifying the recipient, and a payment amount to be paid by the payer to the recipient; a cash handling unit that performs a depositing process of recognizing and counting cash deposited by the payer to obtain a deposit amount and to store therein the deposited cash; and a memory that stores transfer information in which the payment information and the deposit amount are registered, wherein the receiving unit accepts, from the recipient, the recipient information, and the cash handling apparatus refers to the transfer information to identify a payment amount corresponding to the recipient information, and dispenses cash corresponding to the payment amount using the cash handling unit.

## Description

### TECHNICAL FIELD

The present disclosure relates to a cash handling apparatus, a cash handling system, and a cash handling method for transferring cash among a plurality of users.

### BACKGROUND ART

When it is desired to hand over cash to another person, methods for transferring a monetary value corresponding to the cash include not only directly handing over cash in physical form but also transferring a monetary value corresponding to the cash through electronic money transfers or bank account transfers. For example, Patent Literature 1 discloses a system in which an owner of an electronic money account permits another person to use the account, thereby enabling the other person to use electronic money. For example, when a parent asks a child to purchase an item in a store, the parent enables the child to purchase the item using an account of the parent simply by permitting the child to use the account without handing cash to the child. The transfer of a monetary value corresponding to cash by electronic money transfers or bank transfers can be performed through online processing, and therefore can be performed more easily than in a case where cash is directly handed over to another person.

### CITATION LIST

### [PATENT LITERATURE]

[PTL 1] Japanese Laid-Open Patent Publication No. 2021-26317

### SUMMARY OF THE INVENTION

### PROBLEMS TO BE SOLVED BY THE INVENTION

The remittance using electronic money and bank transfers can be easily performed; however, it requires that both a sender and a receiver of a monetary value corresponding to cash can use electronic money or that both have bank accounts. In addition, since a process related to electronic money and bank transfers is performed using a predetermined server, a network environment for communicating with the server is required. For example, when an employer makes wage payments to employees, employees may not have bank accounts or may request payment in cash. When there are a lot of such employees, the payment in cash may be preferred.

The present disclosure has been made in view of the conventional art including the above problem, and one object thereof is to provide a cash handling apparatus, a cash handling system, and a cash handling method for transferring cash among a plurality of users.

### SOLUTION TO THE PROBLEMS

A cash handling apparatus according to one aspect of the present disclosure includes: a receiving unit configured to accept, from a payer who pays a recipient in cash, payment information including payer information for identifying the payer, recipient information for identifying the recipient, and a payment amount to be paid by the payer to the recipient; a cash handling unit configured to perform a depositing process of recognizing and counting cash deposited by the payer to obtain a deposit amount and configured to store therein the deposited cash; and a memory configured to store transfer information in which the payment information and the deposit amount are registered. The receiving unit accepts, from the recipient, recipient information, and the cash handling apparatus refers to the transfer information to identify a payment amount corresponding to the inputted recipient information, and dispenses cash corresponding to the identified payment amount from the cash handling unit.

In the above configuration, in the depositing process, the deposited cash may be divided into first cash corresponding to the payment amount and second cash other than the first cash. The first cash may be stored in a first storage unit of the cash handling unit, and the second cash may be stored in a second storage unit of the cash handling unit, and the dispensing process may be performed using cash in the first storage unit may be dispensed.

In the above configuration, the payment information may include a dispensing deadline by which cash corresponding to the payment amount can be dispensed from the cash handling unit. After expiration of the dispensing deadline, remaining cash, which is the first cash remaining in the first storage unit without being dispensed, may be moved from the first storage unit to the second storage unit.

In the above configuration, cash deposited through the deposit process by each payer may be handled separately such that cash deposited by a first payer is stored in a first storage unit of the cash handling unit and cash deposited by a second payer is stored in a second storage unit of the cash handling unit. In the dispensing process by the recipient who receives cash from the first payer, the cash may be dispensed from the first storage unit, and in the dispensing process by the recipient who receives cash from the second payer, the cash is dispensed from the second storage unit.

In the above configuration, the payment information may include a dispensing deadline by which cash corresponding to the payment amount can be dispensed from the cash handling unit. After expiration of the dispensing deadline, cash in the first storage unit and cash in the second storage unit may be moved to a third storage unit of the cash handling unit.

In the above configuration, the payment information may include a dispensing deadline for dispensing cash corresponding to the payment amount. When the dispensing deadline expires before dispensing the cash corresponding to the payment amount, the cash handling apparatus may perform a notification process for notifying the payer and the recipient that the cash can no longer be dispensed.

In the above configuration, the receiving unit may acquire the payment information from a payer terminal operated by the payer, and acquires the recipient information from a recipient terminal operated by the recipient.

In the above configuration, the receiving unit may be a reader configured to read a graphic code including the payment information from a screen of a payer terminal operated by the payer, and to read a graphic code including the recipient information from a screen of a recipient terminal operated by the recipient.

A cash handling system according to one aspect of the present disclosure includes: a payer terminal that is operated by a payer who pays a recipient in cash; a cash handling apparatus configured to accept, from the payer terminal to a receiving unit, payment information including payer information for identifying the payer, recipient information for identifying the recipient, and a payment amount to be paid by the payer to the recipient, recognize and count cash deposited by the payer to obtain a deposit amount, store therein the cash, and store, in a memory, transfer information in which the payment information and the deposit amount are registered; and a recipient terminal that is operated by the recipient. The receiving unit accepts the recipient information from the recipient terminal, and the cash handling apparatus refers to the transfer information to identify the payment amount corresponding to the inputted recipient information, and dispenses therefrom cash corresponding to the identified payment amount.

A cash handling method according to one aspect of the present disclosure includes: accepting, from a payer who pays a recipient in cash, payment information including payer information for identifying the payer, recipient information for identifying the recipient, and a payment amount to be paid by the payer to the recipient, by a cash handling apparatus; performing a depositing process of accepting, recognizing, and counting cash deposited by the payer to obtain a deposit amount, and storing the deposited cash, in the cash handling apparatus; storing transfer information in which the payment information and the deposit amount are registered, in the cash handling apparatus; and accepting the recipient information from the recipient, referring to the transfer information to identify the payment amount corresponding to the inputted recipient information, and dispensing cash corresponding to the identified payment amount, from the cash handling apparatus.

### ADVANTAGEOUS EFFECTS OF THE INVENTION

Use of the cash handling apparatus according to the present disclosure enables a payer to hand over cash to a recipient when the payer pays the recipient in cash, via the cash handling apparatus.

### BRIEF DESCRIPTION OF THE DRAWINGS

FIG. 1 illustrates an outline of processes performed by a cash handling apparatus according to the present embodiment;
FIG. 2 shows an example of the configuration of the cash handling apparatus;
FIG. 3 illustrates processes performed using the cash handling apparatus;
FIG. 4 shows an example of transfer information;
FIGS. 5A to 5C illustrate other examples of processes performed by the cash handling apparatus; and
FIGS. 6A and 6B illustrate examples in which information is transmitted and received between terminals and the cash handling apparatus by another method.

### DESCRIPTION OF EMBODIMENTS

Hereinafter, embodiments of a cash handling apparatus, a cash handling system, and a cash handling method according to the present disclosure will be described with reference to the accompanying drawings. When a payer pays a recipient in cash, the cash handling apparatus according to the present disclosure accepts, from the payer, a deposit of cash to be stored in the apparatus, a designation of the recipient, and a specification of a payment amount to be paid to the recipient out of the deposited cash. The cash handling apparatus recognizes that a recipient who comes to receive cash is the recipient designated by the payer, and dispenses cash corresponding to the payment amount specified by the payer. Thus, the payer can transfer cash to the recipient via the cash handling apparatus 10.

### <Embodiment 1>

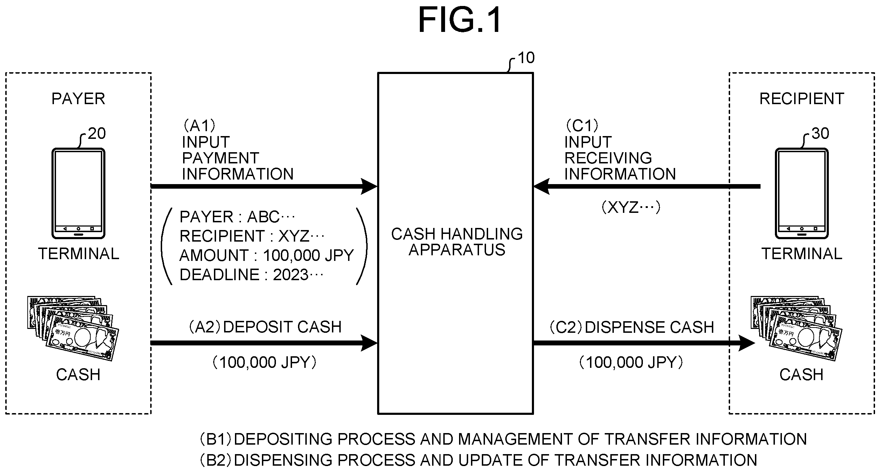

FIG. 1 illustrates an outline of processes performed by a cash handling apparatus 10 according to the present embodiment. The cash handling apparatus 10 can perform a depositing process of recognizing, counting, and storing deposited cash in the apparatus, and a dispensing process of dispensing stored cash from the apparatus. The cash handling apparatus 10 can exchange information with a terminal 20 operated by a payer and a terminal 30 operated by a recipient.

For example, a smartphone or a tablet having a touch panel type liquid crystal display device used as an operation/display unit is used as each of the terminals 20, 30. A method for exchanging information between the cash handling apparatus 10 and the terminals 20, 30 is not particularly limited. For example, information may be transmitted and received using short-range wireless technology such as Bluetooth (registered trademark). Information displayed on the operation/display unit may be read using a reading device such as a camera, to exchange the displayed information.

A payer operates the payer terminal 20 to input payment information into the cash handling apparatus 10 (A1). The payment information includes payer identification information for identifying a payer, recipient identification information for identifying a recipient, a payment amount to be paid by the payer to the recipient, and a dispensing deadline by which the recipient can dispense cash corresponding to the payment amount from the cash handling apparatus 10. Although FIG. 1 shows one recipient, the payer may include, in the payment information, recipient identification information, a payment amount, and a dispensing deadline for each of a plurality of recipients.

The type of the payer identification information is not particularly limited as long as the payer can be uniquely identified by it. For example, a user ID and a password with which the payer can be identified may be used as the payer identification information. Terminal identification information such as the IMEI (International Mobile Equipment Identifier) of the payer terminal 20 may be used as the payer identification information. As with the payer identification information, the type of the recipient identification information is not particularly limited as long as the recipient can be uniquely identified by it. In the present embodiment, the description will be continued with an example in which the terminal identification information is used as identification information.

The payer deposits cash corresponding to a payment amount to be paid to the recipient, into the cash handling apparatus 10 (A2). For example, as shown in FIG. 1, the payer inputs payment information including payer identification information "ABC···" , recipient identification information "XYZ···", a payment amount of "100,000 JPY", and a dispensing deadline of "2023···", into the cash handling apparatus 10 by using the payer terminal 20, and deposits cash of 100,000 JPY into the cash handling apparatus 10. When the payer pays two or more recipients in cash, the payer deposits cash corresponding to the total amount of the payment amounts to the recipients. The cash handling apparatus 10 may be an apparatus for accepting deposits of proceeds from sales of a store to which the payer belongs, and proceeds from sales that are greater than the payment amount may be deposited in the cash handling apparatus 10. An example of this type of apparatus will be described later.

Upon acquiring the payment information from the payer terminal 20, the cash handling apparatus 10 performs the depositing process for cash deposited by the payer, and manages transfer information including a deposit amount and the payment information (B1). The transfer information is stored in a memory inside the cash handling apparatus 10. The deposit amount of cash deposited by the payer, and each item of information included in payment information, are registered in the transfer information. Based on the transfer information, the cash handling apparatus 10 can recognize that a recipient identified by recipient identification information "XYZ···" can dispense cash corresponding to a payment amount of "100,000 JPY", from the cash deposited by a payer identified by the payer identification information "ABC···", until a dispensing deadline of "2023···".

The recipient operates the recipient terminal 30 to input receiving information into the cash handling apparatus 10 (C1). The receiving information includes the recipient identification information for identifying the recipient. The terminal identification information of the terminal 30 is used as the recipient identification information. Thus, even in a situation where the terminal 30 cannot communicate with other terminals, the recipient can input the receiving information including the recipient identification information into the cash handling apparatus 10. The receiving information and the recipient identification information are not particularly limited. The receiving information may include the recipient identification information received via a network. The receiving information may include information other than the recipient identification information. For example, the receiving information may include the recipient identification information, the payer identification information, the payment amount, and the like, received by the recipient terminal 30 from the payer terminal 20 directly, via a network or an external device.

Upon acquiring the receiving information from the recipient terminal 30, the cash handling apparatus 10 dispenses cash, based on the recipient identification information (C2). The cash handling apparatus 10 dispenses cash corresponding to a payment amount registered in association with the recipient identification information in the transfer information.

For example, the cash handling apparatus 10 refers to the transfer information, based on the recipient identification information "XYZ···" included in the receiving information acquired from the recipient terminal 30. Based on the information registered in advance in the transfer information, the cash handling apparatus 10 recognizes that the recipient can dispensing deadline a payment amount of "100,000 JPY" from the cash deposited by the payer identified by the payer identification information "ABC···". The cash handling apparatus 10 dispenses cash corresponding to the payment amount of 100,000 JPY based on the recognition result, and thus the recipient can receive the cash paid by the payer.

After completing the dispensing process, the cash handling apparatus 10 updates the transfer information so as to indicate that the recipient has dispensed the cash (B2). The recipient can select whether to dispense the entire payment amount at one time, or dispense a part of the payment amount. An example of this mode will be described later.

Even in a case where a payer pays each of a plurality of recipients in cash, the cash handling apparatus 10 identifies each of the plurality of recipients designated by the payer, based on the recipient identification information acquired from the recipient terminal 30, and dispenses cash corresponding to each payment amount specified by the payer for each recipient to the recipients. The payer can cause the cash handling apparatus 10 to dispense cash corresponding to the payment amount specified in the payment information to each of the plurality of recipients designated in the payment information, simply by inputting the payment information and depositing cash into the cash handling apparatus 10.

Based on the recipient identification information, the cash handling apparatus 10 determines whether or not a person operating the recipient terminal 30 is the recipient designated by the payer as a cash payment destination. If the recipient identification information of that person is not registered in the transfer information, the cash handling apparatus 10 determines that the person is not the recipient designated by the payer and does not perform the dispensing process. In this case, the cash handling apparatus 10 displays information indicating that cash to be paid by the payer for that person is not present in the apparatus, on a screen of the recipient terminal 30 or a screen of the operation/display unit provided in the cash handling apparatus 10, thereby notifying that the dispensing process cannot be performed, for example.

Even if it is determined that the person operating the recipient terminal 30 is the recipient designated by the payer as the cash payment destination, when the dispensing deadline specified by the payer has passed, the cash handling apparatus 10 does not perform the dispensing process. In this case, the cash handling apparatus 10 notifies the recipient that the dispensing deadline has passed. For example, when the receiving information is inputted via the recipient terminal 30, the cash handling apparatus 10 displays information indicating that the dispensing deadline has passed and that cash cannot be dispensed, on the screen of the recipient terminal 30 or the screen of the cash handling apparatus 10.

When the dispensing deadline has passed, cash is paid by the payer to the recipient by another method. For example, the cash handling apparatus 10 notifies the payer terminal 20 of recipient identification information of the recipient who has not dispensed cash as of the dispensing deadline and a payment amount that the recipient was able to dispense. In addition, when notifying the recipient that the dispensing deadline has passed, the cash handling apparatus 10 can display information instructing the recipient to receive cash from the payer by another method, on the screen of the recipient terminal 30 or the screen of the cash handling apparatus 10. When a cash transfer method is predetermined, information on this method may be displayed on the screen. After the dispensing deadline has passed, the cash handling apparatus 10 may transmit the notifications to the payer terminal 20 and the recipient terminal 30 directly without using a network or using a network, as with the payment information and the receiving information.

For example, after the dispensing deadline has passed, the recipient having received a notification may visit the payer, and the payer having received a notification may pay the recipient in cash in person. If the recipient can use electronic money or a bank transfer, the payer may make a payment to the recipient by remittance using electronic money or by bank transfer. The payment to the recipient may be made by charging electronic money corresponding to an amount that should have been dispensed to the recipient to a mobile terminal owned by the recipient, such as the recipient terminal 30, by using a communication function provided in the cash handling apparatus 10.

After the dispensing deadline has passed, the remaining portion of the deposited cash in the cash handling apparatus 10 is handled in a predetermined manner. For example, the cash remaining in the apparatus is retained in the cash handling apparatus 10 until the cash is collected to the outside of the apparatus. The remaining cash may be stored in a storage unit dedicated to collection, provided inside the cash handling apparatus 10. The remaining cash is collected from the cash handling apparatus 10 at a predetermined timing and is transported to a financial institution, and an amount corresponding to the remaining cash is transferred to the account of the payer. The cash handling apparatus 10 may notify a server used by the financial institution of an amount of cash for which the payer has ownership and information on the account of the payer, and the financial institution may make a bank transfer. The dispensing deadline may be set in conjunction with the period during which cash is collected from the cash handling apparatus 10. This will be described below.

As described above, a payer can pay a recipient in cash simply by inputting the payment information into the cash handling apparatus 10 and depositing cash. The recipient can dispense and receive the cash paid by the payer from the cash handling apparatus 10 simply by inputting the receiving information including the recipient identification information into the cash handling apparatus 10. The cash handling apparatus 10 can exchange the payment information and the receiving information directly with the payer terminal 20 and the recipient terminal 30 without using a network. Thus, for example, even if a network failure occurs, cash can be transferred between the payer and the recipient via the cash handling apparatus 10.

### <Embodiment 2>

A specific example in which the cash handling apparatus 10 installed in a shopping mall including a plurality of stores is used to accept deposits of proceeds from sales of the stores and to pay salaries in cash from the stores to employees, will be described.

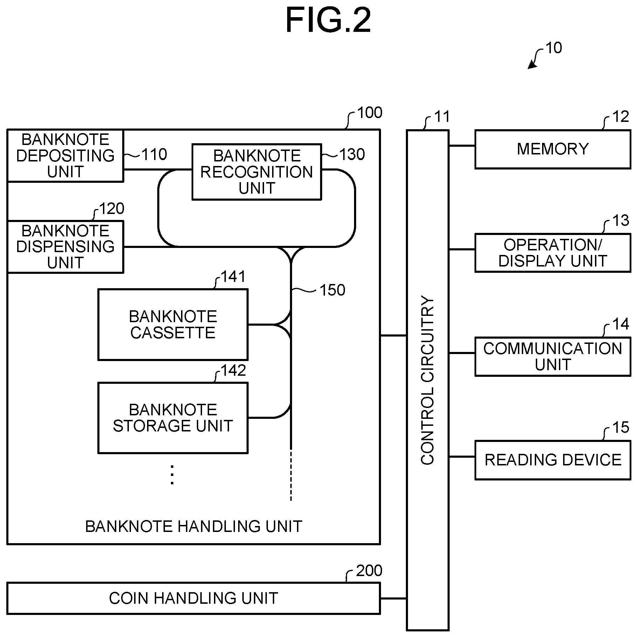

FIG. 2 shows an example of the configuration of the cash handling apparatus 10. The cash handling apparatus 10 includes a banknote handling unit 100, a coin handling unit 200, a control circuitry 11, a memory 12, an operation/display unit 13, a communication unit 14, and a reading device 15.

The cash handling apparatus 10 can cause the banknote handling unit 100 to perform the depositing process and the dispensing process for banknotes. The banknote handling unit 100 includes a banknote depositing unit 110, a banknote dispensing unit 120, a banknote recognition unit 130, a banknote cassette 141, a banknote storage unit 142, and a banknote transport unit 150. The banknote transport unit 150 transports banknotes along a transport path that connects the respective units as shown in FIG. 2.

In the depositing process, banknotes received through the banknote depositing unit 110 are fed into the apparatus, and are transported by the banknote transport unit 150. The banknote recognition unit 130 recognizes the banknotes being transported by the banknote transport unit 150. The banknote recognition unit 130 recognizes the denomination of each banknote. The banknote recognition unit 130 may recognize the authenticity of each banknote and/or the fitness indicating the degree of damage of each banknote. Based on a result of recognition by the banknote recognition unit 130, a banknote deposit amount, i.e., the total amount of the deposited banknotes, included in the deposit amount, is calculated. Banknotes that cannot be deposited, among the recognized banknotes, are rejected through the banknote dispensing unit 120. Banknotes that can be deposited are stored in the banknote storage unit 142. The banknote storage unit 142 can store banknotes therein and feed out stored banknotes. Although FIG. 2 shows one banknote storage unit 142, the number of the banknote storage units 142 is not particularly limited. For example, the denominations to be stored are respectively assigned to a plurality of the banknote storage units 142, so that banknotes are stored by denomination. For example, stores which are payers are respectively assigned to the plurality of banknote storage units 142, so that banknotes are stored by store. The plurality of banknote storage units 142 may be divided into storage units for dispensing and storage units for collection. The plurality of banknote storage units 142 may be divided into storage units to be used until a predetermined period elapses (e.g., until a dispensing deadline) from a deposit, and storage units to be used after the predetermined period has elapsed. The banknote cassette 141 capable of storing therein banknotes is dismountably mounted to the cash handling apparatus 10. For example, the banknote cassette 141 is used to store banknotes to be collected from the cash handling apparatus 10 to the outside of the apparatus.

In the dispensing process, banknotes to be dispensed are fed out, one by one, from one or more banknote storage units 142 and are transported by the banknote transport unit 150. The banknotes transported by the banknote transport unit 150 are dispensed through the banknote dispensing unit 120. The banknote being transported by the banknote transport unit 150 may be recognized by the banknote recognition unit 130, and then dispensed after recognition.

The cash handling apparatus 10 can cause the coin handling unit 200 to perform the depositing process and the dispensing process for coins. Since the configuration and operation of the coin handling unit 200 for depositing and dispensing coins have been conventionally known, detailed description thereof is omitted.

The memory 12 is a nonvolatile storage device. The memory 12 stores therein transfer information and various types of information necessary for the operation of the cash handling apparatus 10. The operation/display unit 13 is implemented as a touch panel type liquid crystal display device. The operation/display unit 13 functions as an operation unit through which various types of information are inputted into the cash handling apparatus 10. The operation/display unit 13 functions as a display unit on which various types of information are displayed.

The communication unit 14 is used to transmit and receive information to and from an external device. For example, the cash handling apparatus 10 transmits and receives information to and from an external device via a network such as the Internet by using the communication unit 14. For example, the cash handling apparatus 10 can transmit information to the external device using short-range wireless technology by using the communication unit 14. The external devices include the payer terminal 20 and the recipient terminal 30.

The reading device 15 acquires information from an external device. For example, the cash handling apparatus 10 can acquire information from an external device by causing the reading device 15 to read and decode a graphic code such as a barcode or a QR code (registered trademark) displayed on the display unit of the external device. The external devices include the payer terminal 20 and the recipient terminal 30.

When the cash handling apparatus 10 exchanges information with the payer terminal 20 and the recipient terminal 30 by using the communication unit 14, the communication unit 14 functions as a receiving unit that accepts input of information. The cash handling apparatus 10 can also accept input of information from the payer terminal 20 and the recipient terminal 30 by using the reading device 15 as a receiving unit. Hereinafter, a case where the reading device 15 accepts input of information from the payer terminal 20 and the recipient terminal 30 will be described as an example.

The control circuitry 11 controls the components constituting the cash handling apparatus 10. A program corresponding to the control circuitry 11 is stored in advance in the memory 12 or a dedicated storage device. This program is executed by hardware such as a CPU to realize the functions and operations of the control circuitry 11. The control circuitry 11 controls the banknote handling unit 100 and the coin handling unit 200 using information acquired from at least one of the memory 12, the operation/display unit 13, the communication unit 14, and the reading device 15, whereby processes for banknotes and coins are performed as described above. The control circuitry 11 controls the components to realize the functions and operations of the cash handling apparatus 10 according to the present embodiment.

FIG. 2 is an example and does not limit the configuration of the cash handling apparatus 10. The configuration of the cash handling apparatus 10 is not particularly limited as long as each process described in the present embodiment can be performed. For example, the cash handling apparatus 10 may include only one of the banknote handling unit 100 and the coin handling unit 200, and may process only banknotes or coins. Since depositing and dispensing of banknotes and depositing and dispensing of coins in the cash handling apparatus 10 can be performed in a similar manner, the following description will be continued with banknotes as an example. When coins are handled by the cash handling apparatus 10, the coins may be handled in a manner similar to the banknote process described below.

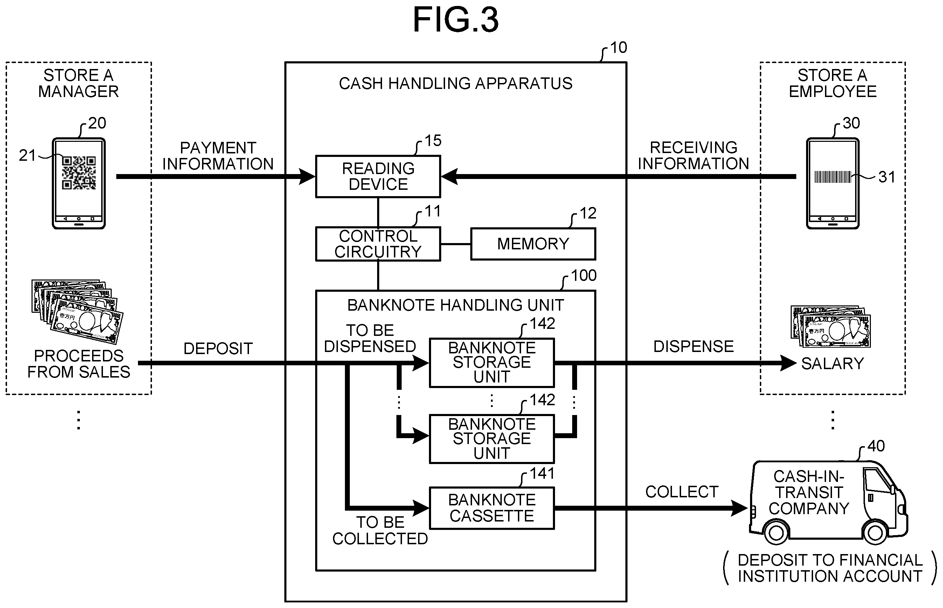

FIG. 3 illustrates processes performed using the cash handling apparatus 10. The cash handling apparatus 10 is installed in a back office of the shopping mall, for example. The stores in the shopping mall deposit proceeds from sales into the cash handling apparatus 10. A cash-in-transit company 40 collects the proceeds from sales of these stores from the cash handling apparatus 10. For example, the collected proceeds from sales of each store are transported to a financial institution, and an amount corresponding to the proceeds from sales of each store is transferred to an account of the store. Each store can use the cash handling apparatus 10 not only to deposit the proceeds from sales but also to pay salaries to employees of the store.

As shown in FIG. 3, a manager of a store A operates the terminal 20 to display a graphic code 21 in which payment information is encoded, on an operation/display unit of the terminal 20. The graphic code 21 includes payer identification information of the store A, recipient identification information for each employee of the store A, a salary amount (payment amount) to be paid by the store A to each employee, and a salary dispensing deadline.

For example, the manager of the store A executes a dedicated application on the terminal 20 to designate each employee to whom a salary is paid and to input a salary amount to be paid to the employee, whereby the graphic code 21 is automatically generated by the application. The application on the terminal 20 may acquire recipient identification information of each employee and the salary amount for each employee from another application that performs attendance management of the employees, to generate the graphic code 21.

The manager of the store A causes the reading device 15 of the cash handling apparatus 10 to read the graphic code 21 on the terminal 20. The cash handling apparatus 10 decodes the graphic code 21 read by the reading device 15 to obtain information on the store A and each employee of the store A.

Upon acquiring the payer identification information of the store A, the cash handling apparatus 10 performs the depositing process for proceeds from sales of the store A to obtain an amount of the proceeds from sales. Banknotes deposited as the proceeds from sales into the cash handling apparatus 10 by the manager of the store A are recognized and counted by the banknote handling unit 100, and are stored in at least one of the banknote cassette 141 and the banknote storage units 142.

The cash handling apparatus 10 recognizes the total amount of salaries to be paid by the store A to the employees. The cash handling apparatus 10 can separate the proceeds from sales into cash to be dispensed as salaries to the employees and cash other than the salaries to handle the proceeds from sales. Specifically, as shown in FIG. 3, out of the proceeds from sales, the cash handling apparatus 10 stores, in the banknote storage unit 142, banknotes to be used for dispensing processes, and stores, in the banknote cassette 141, banknotes to be collected by the cash-in-transit company 40.

For example, denominations are assigned respectively to the plurality of banknote storage units 142, and banknotes are stored therein by denomination. In this case, a salary dispensing process is performed using banknotes in each banknote storage unit 142. Banknotes that have not been dispensed from the banknote storage units 142 even after a dispensing deadline has passed are moved from the banknote storage units 142 into the banknote cassette 141, and are collected to the outside of the apparatus. For example, the cash handling apparatus 10 may store the serial numbers of banknotes deposited by each store in association with the corresponding store, and perform the above described processes for the store using banknotes recognized as deposited by that store.

The stores may be assigned respectively to the plurality of banknote storage units 142, and the banknotes may be stored therein by store. In this case, the salary dispensing process to the employees of the store is performed using banknotes deposited by that store. For example, salaries for employees of the store A are dispensed from a banknote storage unit 142 storing banknotes of the store A, and salaries for employees of the store B are dispensed from a banknote storage unit 142 storing banknotes of the store B.

Also, when storing banknotes in the banknotes storage units 142 by store, banknotes that have not been dispensed therefrom even after a dispensing deadline has passed are moved from the banknote storage units 142 into the banknote cassette 141 and are stored as banknotes to be collected, in the same manner as a case where banknotes are stored in the banknote storage units 142 by denomination. These banknotes are stored in the same banknote cassette 141 but may be distinguished for each store. After the banknotes in the banknote storage unit 142 have been moved into the banknote cassette 141, the cash handling apparatus 10 may use the emptied banknote storage unit 142 to store banknotes for another store. This allows banknotes for a plurality of stores having different salary payment schedules to be handled using a single banknote storage unit 142. When there is a store of which all employees have completed dispensing of salaries before the dispensing deadline, the cash handling apparatus 10 may also use the banknote storage unit 142 which has been used for that store and emptied after completing the dispensing of salary, to store banknotes for another store.

After the depositing process, the cash handling apparatus 10 registers, in the transfer information in the memory 12, the amount of proceeds from sales obtained in the depositing process and each item of information obtained from the graphic code 21.

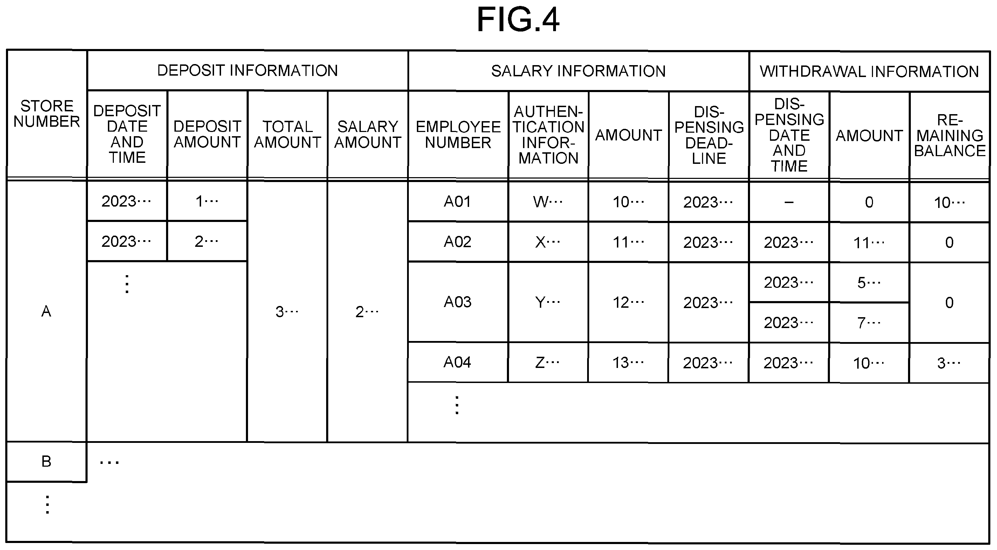

FIG. 4 shows an example of the transfer information. As shown in FIG. 4, deposit information, salary information, and dispensing information are registered in the transfer information for each store. Information for each store is registered in the transfer information while being distinguished based on the payer identification information included in the graphic code 21.

The deposit information includes a deposit date and time, a deposit amount, a total amount, and a salary amount. The deposit date and time is a date and time at which the cash handling apparatus 10 performed the depositing process. The deposit amount is an amount of proceeds from sales deposited into the cash handling apparatus 10. The total amount, for each store, is an amount obtained by summing deposit amounts of the store. For example, when the store A performs depositing processes for proceeds from sales multiple times, an amount obtained by summing the deposit amounts in the respective depositing processes is registered as the total amount. The salary amount, for each store, is a total amount of salaries paid by the store to the employees.

As shown in FIG. 4, the salary information includes an employee number, authentication information, an amount, and a dispensing deadline. The employee number is an identification number used to distinguish each employee. The authentication information is the recipient identification information for each employee. For example, the employee number and the recipient identification information in association with each other are included for all employees in the graphic code 21, i.e., the payment information, and therefore, the employee number and the authentication information of each employee can be obtained from the graphic code 21 as shown in FIG. 4. However, since each employee is distinguishable by the authentication information, i.e., the recipient identification information, the salary information may not necessarily include the employee number and may include only the authentication information.

The amount included in the salary information is a salary amount to be paid by the store to each employee. The dispensing deadline is a date and time indicating a deadline by which each employee can dispense cash corresponding to the salary amount from the cash handling apparatus 10. The dispensing deadline may be specified by a manager of each store, i.e., a payer, or may be automatically set by the cash handling apparatus 10. For example, when the cash-in-transit company 40 periodically collects cash from the cash handling apparatus 10, the cash handling apparatus 10 may automatically set the dispensing deadline, based on the date and time of next collection by the cash-in-transit company 40. For example, if cash is collected by the cash-in-transit company 40 every Friday, the cash handling apparatus 10 may automatically set the dispensing deadline to Thursday of the week following the week in which the depositing process was performed.

As shown in FIG. 4, the dispensing information includes a dispensing date and time, an amount, and a remaining balance. The dispensing date and time is a date and time at which each employee performed a dispensing process of dispensing a salary from the cash handling apparatus 10. The amount is an amount that the cash handling apparatus 10 dispensed in the dispensing process. The remaining balance is an amount that each employee can dispense from the cash handling apparatus 10. The employee can dispense only a part of the salary paid by the store from the cash handling apparatus 10 until the dispensing deadline. When the employee has dispensed a part of the salary from the cash handling apparatus 10, the dispensed amount is registered in the amount field in the dispensing information, and an amount obtained by subtracting the dispensed amount from the salary amount is registered in the remaining balance field. An amount obtained by summing an amount registered in the amount field and an amount registered in the remaining balance field in the dispensing information equals an amount registered in the amount field in the salary information.

As shown in FIG. 3, an employee of the store A operates the terminal 30 to display a graphic code 31, in which receiving information is encoded, on the operation/display unit of the terminal 30. The graphic code 31 includes recipient identification information for identifying the employee. For example, the employee executes a dedicated application on the terminal 30, whereby the graphic code 31 is automatically generated based on the recipient identification information and is displayed on the operation/display unit.

The employee causes the reading device 15 of the cash handling apparatus 10 to read the graphic code 31 on the terminal 30. The cash handling apparatus 10 decodes the graphic code 31 read by the reading device 15 to obtain the recipient identification information.

Based on the obtained recipient identification information, the cash handling apparatus 10 refers to the transfer information shown in FIG. 4 to identify an amount of salary dispensable by the employee and a dispensing deadline. The cash handling apparatus 10 displays the identified amount of salary and the identified dispensing deadline of the salary on a screen of the operation/display unit 13. After confirming the amount of salary and the dispensing deadline, the employee can operate the operation/display unit 13 of the cash handling apparatus 10 to dispense the entire amount of salary, or to dispense only a part of the amount of salary by specifying an amount to be dispensed. After performing the dispensing process, the cash handling apparatus 10 registers information in the dispensing information of the transfer information to update the transfer information.

In the example shown in FIG. 4, an employee of the store A having an employee number "A01" has not performed the dispensing process. Accordingly, a date and time is not registered in the dispensing date and time field in the dispensing information. The amount field indicating a dispensed amount in the dispensing information is registered as 0 (zero). In the remaining balance field, the same amount as that in the amount field in the salary information is registered.

An employee having an employee number "A02" has dispensed the entire amount of salary in a single dispensing process. Accordingly, the date and time of that process is registered in the dispensing date and time field in the dispensing information. In the amount field in the dispensing information, the same amount as that in the amount field in the salary information is registered, and the remaining balance field is registered as 0 (zero). After the remaining balance becomes 0 (zero), even if the employee causes the cash handling apparatus 10 to read a graphic code 31 including receiving information, cash is not dispensed from the cash handling apparatus 10.

An employee having an employee number "A03" has performed two separate dispensing processes to dispense the entire amount of salary. Accordingly, in the dispensing information, information corresponding to these two dispensing processes is registered in the dispensing date and time fields and the amount fields, respectively, and 0 (zero) is registered in the remaining balance field.

An employee having an employee number "A04" has dispensed only a part of the salary in a single dispensing process. Accordingly, information corresponding to the dispensing process is registered in the dispensing date and time field and the amount field in the dispensing information, and a remaining amount obtained by subtracting the dispensed amount from the amount of salary has been registered in the remaining balance field. While the remaining balance is not 0 (zero) and the dispensing deadline has not yet passed, the employee can dispense the remaining amount of cash from the cash handling apparatus 10 by using a graphic code 31 including receiving information and specifying an amount within a range up to the amount registered in the remaining balance field.

In the same manner as in the case of the store A, the cash handling apparatus 10 accepts payment information from other stores including the store B to register corresponding information in the transfer information, and dispenses cash corresponding to a salary of each employee of other stores. The cash handling apparatus 10 can perform dispensing processes for salaries paid in cash by a plurality of stores to a plurality of employees, by managing information on each employee and each store in the transfer information as shown in FIG. 4.

When the dispensing deadline registered in the transfer information has passed, the employee is no longer able to dispense a salary from the cash handling apparatus 10. After the dispensing deadline has passed, the cash handling apparatus 10 performs a process for collecting banknotes, which should have been dispensed as salaries but remain in the banknote storage units 142, to the outside of the apparatus.

In a case where the banknotes to be dispensed as salaries are stored in the banknote storage units 142 by denomination, the cash handling apparatus 10 moves the banknotes, which were to be dispensed as salaries but remain in each banknote storage unit 142, into the banknote cassette 141. In a case where the banknotes to be dispensed as salaries are stored in the banknote storage units 142 by store, the cash handling apparatus 10 moves all banknotes in the banknote storage unit 142 assigned to the store, for which the dispensing deadline has passed, into the banknote cassette 141.

Banknotes stored in the banknote cassette 141 are collected by the cash-in-transit company 40. The collected banknotes are transported to a financial institution for handling, and are transferred to an account of each store that owns the banknotes. For example, the cash handling apparatus 10 transmits the amount of banknotes moved into the banknote cassette 141 and information for identifying the account of the store that owns these banknotes, to a server apparatus of a financial institution via a network, and the financial institution may perform a transfer process for the store account.

The cash handling apparatus 10 notifies the terminal 20 of a store manager of an amount of banknotes moved from the banknote storage unit 142 into the banknote cassette 141, i.e., a remaining amount that has not been dispensed out of the amount that the store instructed the cash handling apparatus 10 to dispense as salaries. The notification may be transmitted from the cash handling apparatus 10 to the terminal 20 via a network, or may be displayed on a screen of the terminal 20 or a screen of the operation/display unit 13 of the cash handling apparatus 10 when the store manager next performs the depositing process using the apparatus 10.

After the dispensing deadline has passed, even if an employee displays a graphic code 31 including receiving information on a screen of the terminal 30 and causes the cash handling apparatus 10 to read it, the cash handling apparatus 10 displays a notification on a screen of the terminal 30 or a screen of the operation/display unit 13 of the cash handling apparatus 10 without performing the dispensing process. The notification includes a remaining balance of the salary, which is an amount that was to be dispensed but has not been dispensed by the employee, and information instructing the employee to receive cash corresponding to the remaining balance at a store for which the employee worked. A notification may be transmitted from the cash handling apparatus 10 to the terminal 30 via a network without waiting for the dispensing process to be performed by the employee. A part or all of the salary for which the dispensing deadline has passed may be handed over between the store manager and the employee, who have received the notification. When the employee can use electronic money or a bank transfer, the cash may be remitted from the store to the employee by electronic money or by bank transfer. For example, the employee may perform a dispensing operation for the remaining amount of salary at the cash handling apparatus 10, and the cash handling apparatus 10 may charge electronic money to the terminal 30 of the employee instead of dispensing cash, based on the dispensing operation by the employee.

In the present embodiment, an example of handling cash remaining in the cash handling apparatus 10 after the dispensing deadline has passed is described. However, the method of handling the remaining cash is not limited to the example. For example, after a predetermined amount of cash is dispensed out of the amount of cash deposited by a payer, cash corresponding to a remaining amount may be moved from the storage unit 142 into the cassette 141 for collection so as to restrict dispensing.

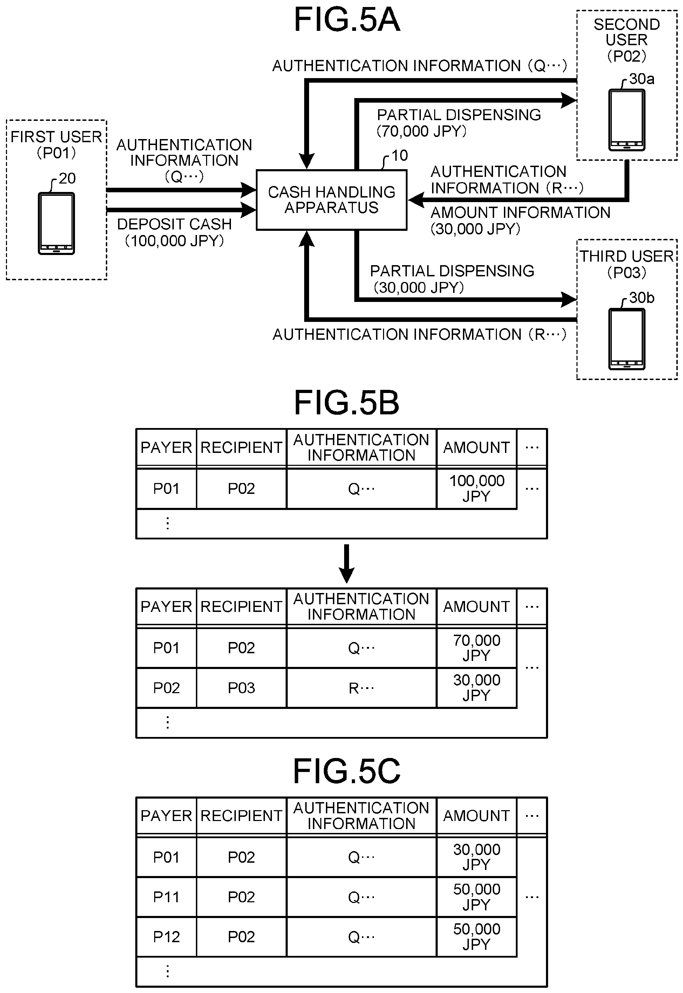

In the present embodiment, an example in which cash is transferred between two parties, a payer and a recipient, is described. However, cash may be transferred among three or more parties. For example, as shown in FIG. 5A, a first user P01 inputs, using the terminal 20, payment information including authentication information (recipient identification information) "Q···" of a second user P02 who is a cash payment destination, into the cash handling apparatus 10, and deposits cash of 100,000 JPY to be paid to the second user P02 into the cash handling apparatus 10. The second user P02 operates a terminal 30a to input, into the cash handling apparatus 10, payment information including authentication information "R···" of a third user P03 and a partial amount of "30,000 JPY" to be paid to the third user P03 out of cash paid from the first user P01 to the second user P02. Upon accepting the payment information from the second user P02, the cash handling apparatus 10 changes transfer information shown on the left side of FIG. 5B to transfer information shown on the right side of FIG. 5B. Specifically, transfer information for 100,000 JPY in which the first user P01 is a payer and the second user P02 is a recipient is divided into transfer information for 70,000 JPY in which the first user P01 is a payer and the second user P02 is a recipient, and transfer information for 30,000 JPY in which the second user P02 is a payer and the third user P03 is a recipient. As a result, as shown in FIG. 5A, the second user P02 can dispense 70,000 JPY out of 100,000 JPY deposited by the first user P01 into the cash handling apparatus 10, by inputting the authentication information "Q···" of the second user P02 into the cash handling apparatus 10 by using the terminal 30a. The third user P03 can dispense 30,000 JPY out of 100,000 JPY deposited by the first user P01 into the cash handling apparatus 10, by inputting the authentication information "R···" of the third user P03 into the cash handling apparatus 10 by using a terminal 30b.

In the present embodiment, an example in which one payer pays a plurality of recipients in cash, such as a case where an employer pays salaries to a plurality of employees, is described. However, the cash handling apparatus 10 can also handle a process in which a plurality of payers pay one recipient in cash. For example, when a plurality of payers P01, P11, P12, ··· input, into the cash handling apparatus 10, payment information including authentication information "Q···" of one recipient P02 and deposit cash, the transfer information is formed as shown in FIG. 5C. In this case, the recipient P02 can collectively dispense cash corresponding to the total amount paid by the payers P01, P11, P12, ··· from the cash handling apparatus 10 by inputting the authentication information "Q···" of the recipient P02 into the cash handling apparatus 10.

For example, a charity organizer soliciting donations prints a graphic code including authentication information of the organizer on charity invitation letters and distributes or sends the invitation letters to a large number of people. A plurality of persons who have received the invitation letters deposit donation amounts into the cash handling apparatus 10 while inputting payment information including authentication information of a recipient, which has been obtained from the graphic code on the invitation letter, into the cash handling apparatus 10. The cash handling apparatus 10 associates the authentication information of the recipient, i.e., recipient identification information for the organizer, with the deposit amount within transfer information, and manages the transfer information. The organizer can dispense a part or all of a donation amounts collected by the plurality of persons from the cash handling apparatus 10, by inputting the authentication information of the organizer into the cash handling apparatus 10. In various cases such as a case of collecting congratulatory monetary gifts for a wedding, cash can be collected and received from a plurality of persons via the cash handling apparatus 10.

In the present embodiment, an example in which the terminal identification information, such as the IMEI of the recipient terminal 30, is used as recipient identification information, i.e., authentication information is described. In the example, the cash handling apparatus 10 acquires the authentication information of the recipient inputted from the payer terminal 20 and then acquires the authentication information from the recipient terminal 30 for the authentication process, and performs the dispensing process based on the authentication result. However, the method of using the authentication information is not limited to the example.

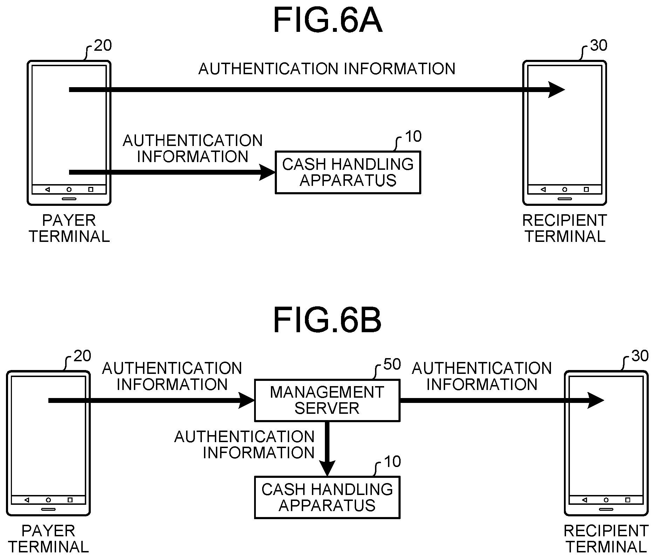

For example, the payer terminal 20 may generate authentication information by a predetermined method and transmit the same directly or via a network to both the recipient terminal 30 and the cash handling apparatus 10, as shown in FIG. 6A. The payer terminal 20 may transmit the authentication information to one of the recipient terminal 30 and the cash handling apparatus 10 via the network, and may transmit the same authentication information directly, without using the network, to the other.

For example, the payer terminal 20 may transmit the generated authentication information to both the recipient terminal 30 and the cash handling apparatus 10 via a network and a management server 50, as shown in FIG. 6B. Alternatively, the payer terminal 20 may transmit the authentication information to one of the recipient terminal 30 and the cash handling apparatus 10 via the network and the management server 50, and transmit the same authentication information directly, without using the network and management server 50, to the other.

As long as a recipient designated by a payer can be uniquely identified based on the authentication information, neither the content of the authentication information nor a method of exchanging the authentication information is particularly limited. In order to avoid the influence of a network failure, it is preferable to directly exchange information between devices using short-range wireless technology or graphic codes. However, even when the network or the management server 50 is used, the payer can pay the recipient in cash via the cash handling apparatus 10 by the above-described method.

As described above, use of the cash handling apparatus according to the present embodiment allows a payer to transfer cash to a recipient via the cash handling apparatus, when the payer wishes to transfer cash to the recipient. The payer deposits cash into the cash handling apparatus and specifies information with which the recipient can be identified and an amount to be transferred to the recipient, and then the cash handling apparatus dispenses cash corresponding to the specified amount to the designated recipient. Thus, cash can be easily transferred not only in a case where one payer transfers cash to a plurality of recipients but also in a case where a plurality of payers transfer cash to one recipient.

## Claims

1. A cash handling apparatus comprising:
a receiving unit configured to accept, from a payer who pays a recipient in cash, payment information including payer information for identifying the payer, recipient information for identifying the recipient, and a payment amount to be paid by the payer to the recipient;
a cash handling unit configured to perform a depositing process of recognizing and counting cash deposited by the payer to obtain a deposit amount and configured to store therein the deposited cash; and
a memory configured to store transfer information in which the payment information and the deposit amount are registered, wherein
the receiving unit accepts, from the recipient, the recipient information, and the cash handling apparatus refers to the transfer information to identify the payment amount corresponding to the recipient information, and dispenses cash corresponding to the payment amount from the cash handling unit.

2. The cash handling apparatus according to claim 1, wherein
in the depositing process, the deposited cash is divided into first cash corresponding to the payment amount and second cash other than the first cash, the first cash is stored in a first storage unit of the cash handling unit, and the second cash is stored in a second storage unit of the cash handling unit, and
the dispensing process is performed using cash stored in the first storage unit.

3. The cash handling apparatus according to claim 2, wherein
the payment information includes a dispensing deadline by which cash corresponding to the payment amount can be dispensed from the cash handling unit, and
after expiration of the dispensing deadline, remaining cash, which is the first cash remaining in the first storage unit without being dispensed, is moved from the first storage unit to the second storage unit.

4. The cash handling apparatus according to claim 1, wherein
cash deposited through the depositing process by each payer is handled separately such that cash deposited by a first payer is stored in a first storage unit of the cash handling unit and cash deposited by a second payer is stored in a second storage unit of the cash handling unit, and
in the dispensing process by the recipient who receives cash from the first payer, the cash is dispensed from the first storage unit, and in the dispensing process by the recipient who receives cash from the second payer, the cash is dispensed from the second storage unit.

5. The cash handling apparatus according to claim 4, wherein
the payment information includes a dispensing deadline by which cash corresponding to the payment amount can be dispensed from the cash handling unit, and
after expiration of the dispensing deadline, cash in the first storage unit and cash in the second storage unit are moved to a third storage unit of the cash handling unit.

6. The cash handling apparatus according to claim 1, wherein
the payment information includes a dispensing deadline for dispensing the cash corresponding to the payment amount, and
in a case where the dispensing deadline expires before dispensing the cash corresponding to the payment amount, the cash handling apparatus performs a notification process for notifying the payer and the recipient that the cash can no longer be dispensed.

7. The cash handling apparatus according to any one of claims 1 to 6, wherein
the receiving unit acquires the payment information from a payer terminal operated by the payer, and acquires the recipient information from a recipient terminal operated by the recipient.

8. The cash handling apparatus according to any one of claims 1 to 6, wherein
the receiving unit is a reader configured to read a graphic code including the payment information from a screen of a payer terminal operated by the payer, and to read a graphic code including the recipient information from a screen of a recipient terminal operated by the recipient.

9. A cash handling system comprising:
a payer terminal operated by a payer who pays a recipient in cash;
a cash handling apparatus configured to
accept, from the payer terminal to a receiving unit, payment information including payer information for identifying the payer, recipient information for identifying the recipient, and a payment amount to be paid by the payer to the recipient,
recognize and count cash deposited by the payer to obtain a deposit amount,
store therein the cash, and
store, in a memory, transfer information in which the payment information and the deposit amount are registered; and
a recipient terminal operated by the recipient, wherein
the receiving unit accepts the recipient information from the recipient terminal, and the cash handling apparatus refers to the transfer information to identify the payment amount corresponding to the recipient information, and dispenses therefrom cash corresponding to the payment amount.

10. A cash handling method comprising:
accepting, from a payer who pays a recipient in cash, payment information including payer information for identifying the payer, recipient information for identifying the recipient, and a payment amount to be paid by the payer to the recipient, by a cash handling apparatus;
performing a depositing process of accepting, recognizing and counting cash deposited by the payer to obtain a deposit amount, and storing the deposited cash, in the cash handling apparatus;
storing transfer information in which the payment information and the deposit amount are registered, in the cash handling apparatus; and
accepting the recipient information from the recipient, referring to the transfer information to identify the payment amount corresponding to the recipient information, and dispensing cash corresponding to the payment amount from the cash handling apparatus.
